# EUROPÄISCHE PATENTANMELDUNG

(11) **EP 0 704 341 A2**
(43) Veröffentlichungstag der Anmeldung: **03.04.1996**
(21) Anmeldenummer: 95250215.1
(22) Anmeldetag: 05.09.1995
(51) Int. Cl.: B60N 2/34

(54) **Fahrzeugsitz**

(30) Priorität: 05.09.1994 DE 4431573
(71) Anmelder: Chang, Gian Hung, D-12047 Berlin (DE)
(72) Erfinder: Chang, Gian Hung, D-12047 Berlin (DE)
(74) Vertreter: Heitsch, Wolfgang

(57) **Zusammenfassung**

Die Erfindung betrifft einen Fahrzeugsitz, welcher in eine Liege umwandelbar ist und an dessen Sitzfläche eine mittels Gelenkmechanismus bis zur Ebene der Sitzfläche neigbare Rückenlehne angeordnet ist.

Die Aufgabe der Erfindung besteht darin, aus jeweils nur einem Fahrzeugsitz, ohne Inanspruchnahme der rückwärtigen Sitze, die Umwandlung in eine akzeptable einheitliche Liegefläche größerer Länge zu ermöglichen, und daß die Liegefläche nicht von abgeklappten Rückenlehnen der hinteren Sitzelemente teilweise überlagert wird und ein ungehinderter ständiger Zugriff zum Kofferraum möglich wird.

Der Vorteil der Erfindung wird darin gesehen, daß durch Umwandlung nur der vorderen Fahrzeugsitze eine relativ komfortable Liegefläche ausreichender Länge geschaffen werden kann und die dazu erforderlichen Zusatzeinrichtungen zusätzlich zur Erhöhung des Fahrkomforts benutzt werden können.

## Beschreibung

Die Erfindung betriffl einen Fahrzeugsitz, welcher in eine Liege umwandelbar ist und an dessen Sitzfläche eine mittels Gelenkmechanismus bis zur Ebene der Sitzfläche neigbare Rückenlehne angeordnet ist.

Fahrzeugsitze dieser Art sind beispielsweise aus den Schriften DE 1 220 268, DE 1 680 026 und DE 2 643 452 bekannt.
Allen diesen Fahrzeugsitzen ist gemeinsam, daß zur Herstellung einer Liegefläche die rückwärtig angeordneten Fahrzeugsitze mit einbezogen werden. Es werden also zur Schaffung einer Liegefläche zwei hintereinander angeordnete Sitze in Anspruch genommen. Das erfordert aber wiederum zusätzliche Mechanismen am hinteren Sitz, die wiederum das Abklappen der Rückenlehnen der hinteren Sitze im Liegezustand der vorderen Sitze nicht gestatten, also ein Zugriff zum Kofferraum im Liegezustand der vorderen Sitze nicht möglich ist, wie es bei den DE 1 220 268 und 2 643 452 der Fall ist.

Nach Bauart der DE 1 680 026 ist zwar ein Abklappen der Rückenlehne des hinteren Sitzelementes im Liegezustand der vorderen Sitze möglich, aber die abgeklappte Rückenlehne des hinteren Sitzelementes würde ca 1/3 der Liegefläche wieder abdecken und damit einen ständigen Zugriff zum Kofferraum ausschließen.

Die Aufgabe der Erfindung besteht darin, aus jeweils nur einem Fahrzeugsitz, ohne Inanspruchnahme der rückwärtigen Sitze, die Umwandlung in eine akzeptable einheitliche Liegefläche größerer Länge zu ermöglichen, und daß die Liegefläche nicht von abgeklappten Rückenlehnen der hinteren Sitzelemente teilweise überlagert wird und ein ungehinderter ständiger Zugriff zum Kofferraum möglich wird.

Ferner ist es Aufgabe der Erfindung, die für die Umwandlung von Sitzen erforderlichen zusätzlichen Bauteile und/oder Mechanismen im Zustand des Sitzes zweckmäßig anderweitig zu nutzen, beispielsweise als zusätzlichen Ablageraum und/oder die Rückenlehne mit Kopfstütze der Größe des Fahrers und Beifahrers besser anzupassen.

Erfindungsgemäß wird diese Aufgabenstellung dadurch gelöst, daß die nach dem Kippen der Rückenlehne der vorderen Sitze, beispielsweise in einem PKW, entstehende Fläche durch Ergänzung mittels zusätzlicher Polsterelemente zu einer akzeptablen Liegefläche verlängert wird. Zu diesem Zweck ist die Rückenlehne über eine Führung am Gelenkmechanismus befestigt, sodaß sie um ein bestimmtes Maß von der Sitzfläche weg verschoben werden kann. In dem entstehenden Zwischenraum werden ein oder mehrere zusätzliche Zwischenpolster angeordnet. Desweiteren wird zur Verlängerung der Liegefläche vor der Sitzfläche ein Verlängerungspolster vorgesehen, welches unter der Sitzfläche oder im Sitzkissen herausziehbar gelagert ist.
Um Zwischenpolster und Verlängerungspolster während der Position als Fahrzeugsitz platzsparend unterbringen zu können, werden beide Polster gemäß der Erfindung erst zum Gebrauch mit Luft gefüllt, was manuell oder über eine an sich bekannte zentrale Luftversorgungseinrichtung des Fahrzeuges erfolgen kann.
Zur Verbesserung der Liegeposition ist das Verlängerungspolster an der Sitzfläche nach dem Herausziehen mittels eines Verstellmechanismus stufenweise oder stufenlos in seiner Neigung verstellbar.
Um die durch Zwischenpolster und Verlängerungspolster vergrößerte Liegefläche in eine waagerechte Lage zu bringen, ist je nach Fahrzeugtyp vorgesehen, den Sitz mit an sich bekannter Höhenverstellvorrichtung in einer Lage zu arretieren, die ein Aufliegen der abgeklappten Rückenlehne eines Vordersitzes auf der abgeklappten Rückenlehne eines hinteren Sitzelementes ermöglicht.

Im Bereich der Erfindung liegt es, daß die Verwendung der erfindungsgemäßen Veränderungen und Ergänzungen an Sitzen sowohl für den Gebrauch als verlängerte Liegefläche, als auch zum zumindest teilweisen Gebrauch der Veränderungen und Ergänzungen der Sitze in der Position als Sitz geeignet sind, den Fahrkomfort zu erhöhen, indem zwischen den Holmen des am Sitz angeordneten Verlängerungspolsters ein Aufnahmebehälter, beispielsweise eine Schale zur Aufnahme von Reiseutensilien, angebracht ist und in dieser der Luftsack liegt.

Auch ist erfindungsgemäß vorgesehen, die Rückenlehne in der Position als Sitz nach oben zu verschieben und zu arretieren und den so entstandenen Zwischenraum zur Stützung der Lendenwirbelsäule mittels aufblasbarem Zwischenpolster auszufüllen. Diese Art Höhenverstellung der Rückenlehne ist besonders für Rückenlehnen angebracht, die eine fest eingearbeitete Kopfstütze haben und oft für große Personen zu kurz sind.

Der Vorteil der Erfindung wird darin gesehen, daß durch Umwandlung nur der vorderen Fahrzeugsitze eine relativ komfortable Liegefläche ausreichender Länge geschaffen werden kann und die dazu erforderlichen Zusatzeinrichtungen zusätzlich zur Erhöhung des Fahrkomforts benutzt werden können.

Die Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen vorteilhafte, schutzfähige Ausführungen darstellen, für die hier Schutz beansprucht wird. Ein Ausführungsbeispiel der Erfindung ist in der Zeichnung dargestellt und wird im folgenden näher erläutert. In der Zeichnung zeigt:

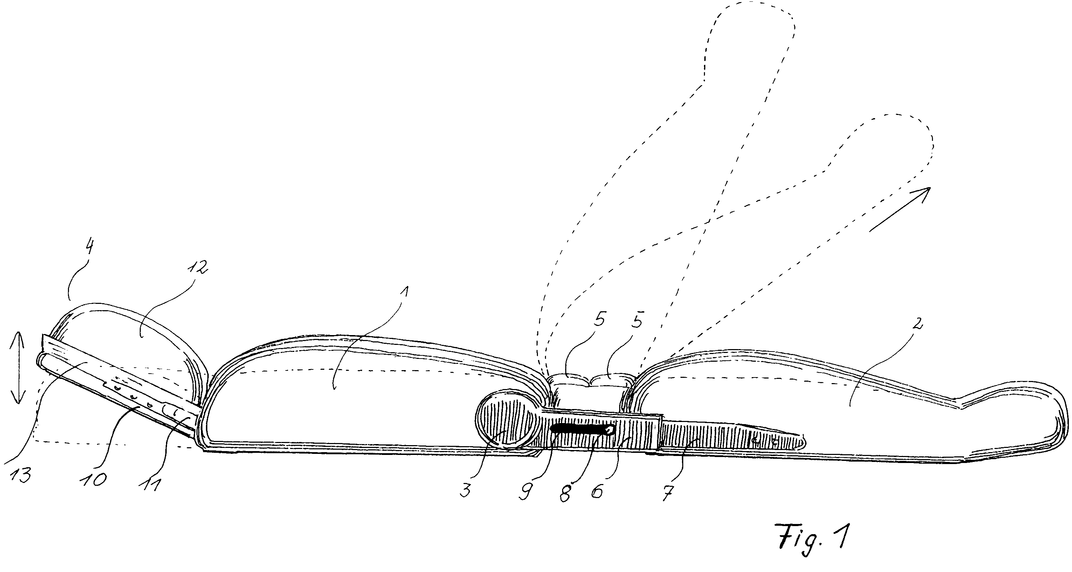

Fig. 1 Seitenansicht des Fahrzeugsitzes in Liegeposition

Wie aus Fig. 1 ersichtlich, besteht der Fahrzeugsitz aus den Hauptelementen Sitzfläche **1** und Rückenlehne **2** mit fest angeordneter oder höhenverstellbarer Kopfstütze. Im vorliegenden Beispiel ist ist eine Rückenlehne mit angearbeiteter Kopfstütze dargestellt. Sitzfläche **1** und Rückenlehne **2** sind durch den Gelenkmechanismus **3** miteinander verbunden, welcher, wie in Fig. 1 angedeutet, die Einstellung der Rückenlehne **2** in beliebiger Neigung ermöglicht. An beiden Seiten des Sitzes schließt sich an den Gelenkmechanismus **3** ein Führungsstück **6** an, worin die beidseitig angeordneten Führungsschienen **7** der Rückenlehne **2** verschiebbar gelagert sind. Um die Verschiebbarkeit zu begrenzen, ist in den Führungsstücken **6** ein Langloch **9** eingearbeitet, während die Führungsschienen **7** mit einem Begrenzungsbolzen **8** versehen sind. Durch das Verschieben der Rückenlehne **2** weg von der Sitzfläche **1** wird ein Zwischenraum gebildet, der im vorliegenden Ausführungsbeispiel durch ein mit Luft gefülltes Zwischenpolster **5** ausgefüllt wird.

Während der Position als Sitz befindet sich die leere Hülle des Zwischenpolsters **5** zwischen Sitzfläche **1** und Rückenlehne **2**, beispielsweise in einer - in der Fig. nicht dargestellten - kammerförmigen Ausnehmung im hinteren Teil der Sitzfläche und/oder im unteren Teil der Rückenlehne. Erst in der Liegeposition wird das Zwischenpolster **5** manuell oder durch eine an sich bekannte zentrale Luftversorgungseinrichtung des Fahrzeugs mit Luft gefüllt.

Wie ebenfalls in Fig. 1 dargestellt, ist vor der Sitzfläche **1** ein Verlängerungspolster **4** auf einem Stütz- und/oder Führungsrahmen **10** vorgesehen. Der Stütz- und/oder Führungsrahmen **10** ist je nach Fahrzeugtyp unterhalb der Sitzfläche **1** oder aus der Sitzfläche **1** herausziehbar angeordnet. Die beiden Holme des Stütz- und/oder Führungsrahmens **10** sind in platzsparender, vorteilhafter Weise durch eine Platte oder ein festes Gewebe aus Textil oder Kunststoff miteinander verbunden und weisen auf der oberen Seite einen aufblasbaren kissenförmigen Luftsack **12** auf.

Im Bereich der Erfindung liegt die Ausführung einer zwischen den Holmen des Stütz- und/oder Führungsrahmens **10** angeordneten Schale, in welcher der aufblasbare Luftsack **12** liegt und die Schale im nicht als Kissen aufgeblasenen Zustand als Ablageschale für bei der Fahrt mitzuführende Utensilien dient.
Die Neigung des Verlängerungspolsters **4** zur Liegefläche kann mit Hilfe der Verstelleinrichtung **11** stufenweise bzw. stufenlos verstellt werden.

### Bezugszeichen

1 - Sitzfläche
2 - Rückenlehne
3 - Gelenkmechanismus
4 - Verlängerungspolster
5 - Zwischenpolster
6 - Führungsstück
7 - Führungsschiene
8 - Begrenzungsbolzen
9 - Langloch
10 - Stütz- und/oder Führungsrahmen
11 - Verstelleinrichtung
12 - Luftsack
13 - Schale

## Patentansprüche

1. Fahrzeugsitz, welcher in eine Liege umwandelbar ist , bestehend aus Sitzfläche und bis zur Ebene der Sitzfläche neigbarer Rückenlehne, **dadurch gekennzeichnet,** daß die Rückenlehne **(2)** in Position als Liege mittels Führungsstücken **(6)** und Führungsschienen **(7)** von der Sitzfläche **(1)** weg verschiebbar ist, wobei in dem entstehenden Zwischenraum ein Zwischenpolster **(5)** gelagert ist, und daß in Position als Liege vor der Sitzfläche **(1)** ein Verlängerungspolster **(4)**, welches in der Position als Sitz unter der oder in der Sitzfläche **(1)** angeordnet ist.

2. Fahrzeugsitz nach Anspruch 1, **dadurch gekennzeichnet**, daß das Verlängerungspolster **(4)** und/oder das Zwischenpolster **(5)** als aufblasbare Luftpolster gestaltet sind.

3. Fahrzeugsitz nach Anspruch 1 und 2, **dadurch gekennzeichnet**, daß das Verlängerungspolster **(4)** und/oder das Zwischenpolster **(5)** an ein im Fahrzeug vorhandenes zentrales Luftversorgungssystem angeschlossen sind.

4. Fahrzeugsitz nach Anspruch 1, **dadurch gekennzeichnet,** daß die Neigung des Verlängerungspolsters **(4)** in der Liegeposition mittels der Verstelleinrichtung **(11)** stufenweise oder stufenlos einstellbar ist.

5. Fahrzeugsitz nach einem der vorangegangenen Ansprüche, **dadurch gekennzeichnet,** daß zwischen den Holmen des Stütz- und/oder Führungsrahmens **(10)** eine den Luftsack **(12)** aufnehmende Schale **(13)** vorgesehen ist, die im Zustand des nicht aufgeblasenen Luftsackes **(12)** die Funktion einer zusätzlichen Ablage erfüllt.

6. Fahrzeugsitz nach einem der Ansprüche 1 bis 3, **dadurch gekennzeichnet**, daß die Rückenlehne **(2)** in Position als Sitz von der Sitzfläche **(1)** weg verschiebbar und arretierbar ist, wobei in dem entstehenden Zwischenraum ein Zwischenpolster **(5)** gelagert ist und manuell oder über ein zentrales Luftversorgungssystem so aufblasbar ist, daß für den Fahrer in Sitzposition eine zusätzliche Stütze in der Lendengegend eintritt.
